# EUROPEAN PATENT SPECIFICATION

(11) **EP 0 822 120 B1**
(45) Date of publication and mention of the grant of the patent: **24.10.2001**
(21) Application number: 97305312.7
(22) Date of filing: 16.07.1997
(51) Int. Cl.: B60R 1/06

(54) **Reversible external sideview mirror**
Umkehrbare Aussenseitenspiegel
Rétroviseur extérieur latéral réversible

(30) Priority: 30.07.1996 BR 9604028
(43) Date of publication of application: 04.02.1998
(73) Proprietor: Ravanini Junior, Oswaldo Luiz, Diadema - Estado de Sao Poaulo (BR)
(72) Inventor: Ravanini Junior, Oswaldo Luiz, Diadema - Estado de Sao Poaulo (BR)
(74) Representative: Murgatroyd, Susan Elizabeth

(56) References cited:
- DE-A- 3 248 759
- FR-A- 2 570 038
- US-A- 4 394 066
- US-A- 4 613 107
- US-A- 5 268 797
- US-A- 5 363 245
- US-A- 5 516 073

## Description

The present invention relates to a reversible external sideview mirror, which can be installed either on the left or right side of a motor vehicle.

In the light of the vehicle driver's seating position, the left and right sideview mirrors need to be set at different angles relative to the vehicle's body. In the traditional manufacturing system of sideview mirrors, in order to produce this angular difference it is necessary to make specifically different molds for the right and left side mirrors. This causes some technical difficulty to the manufacturing process, due to the need for at least two different sets of molds, which is in itself an encumbrance to the performance of the process, its maintenance, handling, etc.

Another relevant negative aspect concerns the need for a larger investment. This is rather more serious when it is known that a technically and economically feasible process needs several sets of molds.

Recently, in order to solve these problems, so-called reversible sideview mirrors were introduced in the market, which are adequately built to be used either on the left or right side of the vehicle through some type of adjustment.

Notwithstanding, the wide use of this type of reversible sideview mirrors, there is one problem that may be attributed to them concerning some complexities in its design, which makes its production process cumbersome, whether at the manufacturing or assembly stage of its various components. As for its use, the major design intricacy evidently generates the possibility for a greater margin of defects, due to the large number of parts that are susceptible to wearing out during the course of its use.

Furthermore, many of the reversible mirrors in current use have relatively difficult procedures and/or are cumbersome for the change between the one and other position, which is undesirable.

A reversible mirror having the features of the preamble of claim 1 is known from FR-A-2 570 038.

An object of the present invention is to provide a reversible external sideview mirror which is simpler and more efficient than such known mirrors.

Accordingly, the present invention consists in a reversible external sideview mirror for a motor vehicle, comprising a mirror assembly; a base for supporting said mirror assembly and arranged to be mounted on a vehicle body; and a left/right reversing mechanism to enable said mirror assembly to be mounted on either the left or right side of the vehicle body, characterized in that said mechanism comprises an annular joint, a first part of which is formed on said mirror assembly and a second part of which is formed on said base, said first and second joint parts having aligning through-apertures through which a swivel pin is resiliently mounted, said swivel pin being provided with a resilient pin arranged generally perpendicular to the axis of said swivel pin, and said second joint part being formed with first and second grooves which are arranged at a predetermined angle relative to each other and into either of which the resilient pin is engageable so as to provide first and second angular positions of the mirror assembly relative to the base.

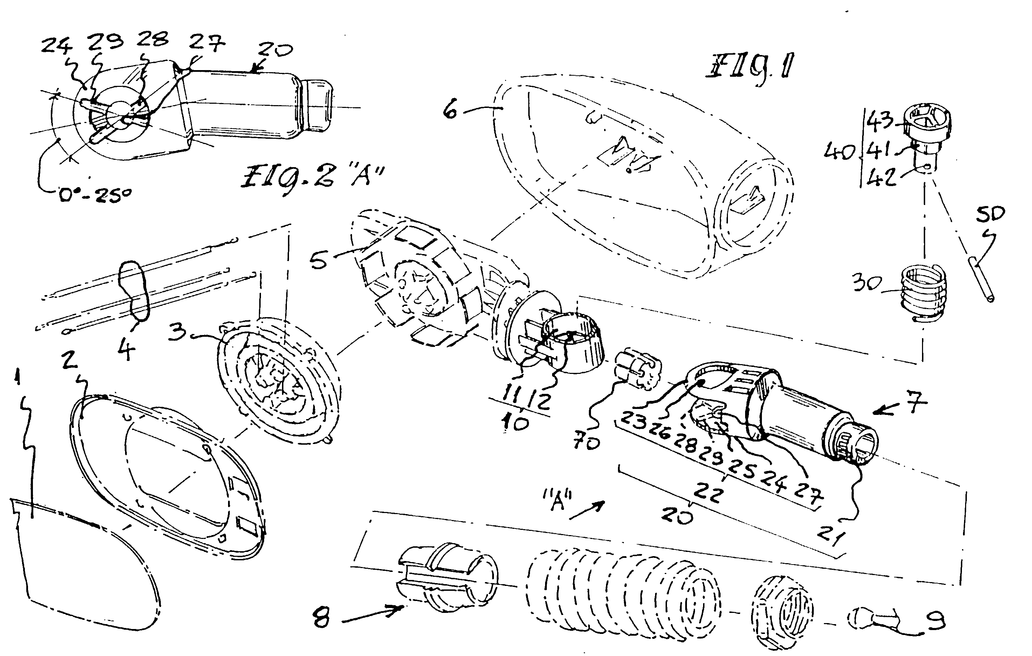

The invention will now be described by way of example with reference to the accompanying drawings, in which:-
Figure 1 shows an exploded perspective view of one embodiment of the invention;
Figure 2 shows a bracket that is a part of the mechanism, as seen from position "A", indicated in the prior figure;
Figure 3 shows a partial sectional view of the assembled mirror shown in Figure 1; and
Figure 4 shows a schematic plan view of the mirror showing both of its possible positions.

Referring now to the Figures, a reversible sideview mirror comprises a mirror assembly including a mirror 1; a mirror frame 2; a bearing assembly 3, which receives the mirror frame; an operating transmission cable sub-assembly 4, that holds the moveable portion of the bearing assembly 3; a support chassis 5 of the bearing assembly 3; and a support housing 6 of chassis 5 and which houses the mirror assembly. A base 7 is provided for mounting the mirror assembly onto a body of a motor vehicle (not shown). A sub-assembly 8, comprised of a sleeve, a rod and a nut, receives base 7 and together they contribute to the mounting of the mirror assembly onto the vehicle body. An operating lever 9 is also provided to which are attached the operating transmission cables 4.

The mirror assembly and base 7 are connected together by a left/right reversing mechanism comprising an annular joint having a first part 10 and a second part 22.

The first part 10 consists of a ring joint 10, incorporated in the side of the chassis 5 facing the vehicle's body and having a vertical stepped passage comprising a first larger diameter portion 11 and a second smaller diameter portion 12.

The second part consists of a "U" joint 22 incorporated in one of the ends of a horizontal tubular support arm 20, forming the base 7, the other end 21 of which is provided with the appropriate means to mount it in the vehicle's body and a section of the operating mechanism of the mirror assembly (electric or by remote control) in addition to lever 9. The "U" joint 22 is composed of a first arm 23 and a second arm 24, between which is an intermediary space 25. The intermediary space 25 receives in coaxial fit the ring joint 10. The first arm 23 is provided with an aperture 26, and the second arm 24 has an aligned aperture 27 with a smaller diameter than aperture 26 of the first arm 23. The other face of the second arm 24 is provided with stabilizing grooves 28,29 arranged in a "X", radially extending from the aperture 27, in such a way that each groove is formed by two segments extending from diametrically opposite points of the aperture 27 and the angle between the segments forming one of the grooves in relation to the segments forming the other is preferably from 0° to 25°. The inside of support arm 20 contains a housing 70, which guides the operating cable sub-assemblies.

The mechanism also includes a helicoidal spring 30, which is housed in the vertical passage of the first portion of the annular joint 10 set on a step that is defined between the larger diameter upper portion 11 and the lower smaller diameter portion 12 of the first segment of the ring joint 10. A stepped swivel pin 40 is formed by a smaller diameter part 41, which goes through spring 30 and the smaller diameter aperture 27 of the second arm 24 of the "U" joint 22 such that its end extends out from the second arm 24 and is provided with a radial hole 42. This pin 40 also has a larger diameter part 43, which is pressed against spring 30 and housed in the larger diameter aperture 26 of the first arm 23 of the "U" joint 22.

A resilient maintenance pin 50 of the mirror's stabilization/assembly installation in the selected position extends through the radial hole 42 at the end of the swivel pin 40, stabilizing the installed assembly. The resilient pin 50 thus extends generally perpendicular to the swivel axis of the swivel pin 40 and is alternatively lodged in the mirror's stabilization groove 28 on the right or in the mirror's stabilization groove 29 on the left, according to whether the mirror is to be installed on the left or right side of the vehicle.

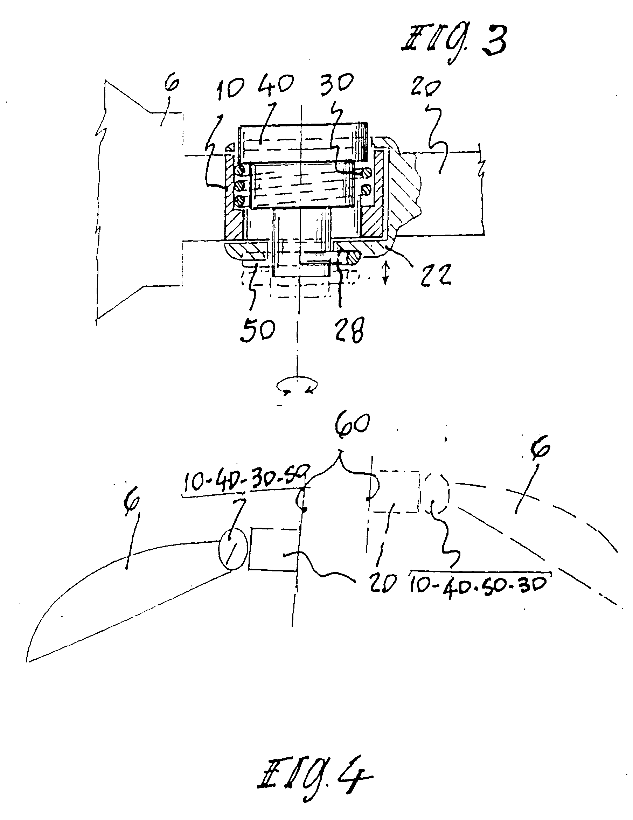

Therefore, for instance when the mirror is installed on the left side of the vehicle 60 (shown by solid line on figure 4), the elastic pin 50 is lodged in the mirror's corresponding installation groove 29 on the left against which it stays pressed and fixed by action of spring 30, thereby stabilizing the mirror assembly to be used in that position. In order to reverse the mirror to be used on the right side of the vehicle (shown by broken line in Figure 4), the mirror assembly is pulled backwards (or pushed forwards, depending in which position it is and where one wishes it to be), whereby the mirror assembly changes position. The resilient pin 50 disconnects from the left installation groove 29, the swivel pin 40 moves axially against the force of spring 30 and the resilient pin 50 moves angularly until reaching the right side installation groove 28. At that instance the swivel pin 40 is angularly moved to the opposite position by the spring 30, which distends and connects the elastic pin 50 in the mirror's stabilization groove 28 for use on the right side. Once this is accomplished, the mirror assembly is turned 180° around its geometric axis and in the horizontal plane, at the end of which it is in position to be installed on the right side of the vehicle.

A mirror with such a design can be built from any of the currently available materials, and it may also have different configurations and dimensions from those normally employed.

The angle between the segments forming the grooves can be selected in order to fulfil the many different configurations and dimensions that the mirror assembly may have and/or to fit the dimensions and/or the driver's position and other dimensions relative to the vehicle on which the mirror assembly is to be installed and/or to fulfil the desirable characteristics for the reversing mechanism itself and/or others.

Within the above described basic construction it is evident that the mirror the objective of the present patent application may undergo changes relative to the materials, dimensions and construction details without any deviation from the scope of the appended claims.

## Claims

1. A reversible external sideview mirror for a motor vehicle, comprising a mirror assembly (1,2,6); a base (7) for supporting said mirror assembly (1,2,6) and arranged to be mounted on a vehicle body; and a left/right reversing mechanism (10,22,40) to enable said mirror assembly (1,2,6) to be mounted on either the left or right side of the vehicle body, **characterized in that** said mechanism (10,22,40) comprises an annular joint (10,22), a first part (10) of which is formed on said mirror assembly (1,2,6) and a second part (22) of which is formed on said base (7), said first and second joint parts (10,22) having aligning through-apertures (11,12,26,27) through which a swivel pin (40) is resiliently mounted, said swivel pin (40) being provided with a resilient pin (50) arranged generally perpendicular to the axis of said swivel pin (40), and said second joint part (22) being formed with first and second grooves (28,29) which are arranged at a predetermined angle relative to each other and into either of which the resilient pin (50) is engageable so as to provide first and second angular positions of the mirror assembly (1,2,6) relative to the base (7).

2. A mirror as claimed in claim 1, wherein said second joint part (22) comprises first and second arms (23,24) spaced apart from each other and between which said first joint part (10) is located.

3. A mirror as claimed in claim 2, wherein said resilient pin (50) is provided on an end of said swivel pin (40) which extends out of said aperture (27) in said second arm (24), and said grooves (28,29) in either of which said resilient pin (50) engages are formed on an outer face of said second arm (24).

4. A mirror as claimed in claim 3, wherein the first and second grooves (26,27) are arranged in an "X" formation extending radially with respect to said aperture (27) in said second arm (24).

5. A mirror as claimed in claim 4, wherein the grooves (26,27) are arranged at an angle of between 0° and 25° either side of a cental line of said "X" formation.

6. A mirror as claimed in any preceding claim, wherein a helical spring (30) is mounted around said swivel pin (40) within said aperture (11,12) through said first joint part (10).

7. A mirror as claimed in any one of claims 2 to 5, wherein said through-aperture (11,12) of said first joint part (10) comprises a stepped passage in which one portion (11) of said passage has a larger diameter than another portion (12) thereof, and said aperture (27) in said second arm (24) of said second joint part (22) has a smaller diameter than the aperture (26) in said first arm (23) of said second joint part (22).

8. A mirror as claimed in claim 6, wherein said swivel pin (40) is stepped such that a smaller diameter portion (41) thereof extends through the aperture (27) in said second arm (24) and a larger diameter portion (43) thereof is engaged in said aperture (26) in said first arm (23).

9. A mirror as claimed in claim 6 or 7, wherein a helical spring (30) is mounted around said swivel pin (40) and is lodged in said stepped passage against a step defined between the larger diameter (11) and smaller diameter (12) portions of said stepped passage.

## Patentansprüche

1. Umkehrbarer Außenseitenspiegel für ein Kraftfahrzeug, umfassend eine Spiegeleinheit (1,2,6); eine Basis (7) zum Tragen der Spiegeleinheit (1,2,6) und angeordnet, um auf einer Fahrzeugkarosserie befestigt zu werden; und einen auf links/rechts umstellbaren Mechanismus (10,22,40), um die Spiegeleinheit (1,2,6) sowohl auf der linken als auch rechten Seite der Fahrzeugkarosserie befestigen zu können, **dadurch gekennzeichnet, daß** der Mechanismus (10,22,40) ein ringförmiges Verbindungsstück (10,22) umfaßt, von welchem ein erstes Teil (10) auf der Spiegeleinheit (1, 2, 6) ausgebildet ist und von welchem ein zweites Teil (22) auf der Basis (7) ausgebildet ist, die ersten und zweiten Verbindungsstückteile (10,22) ausrichtende durchgehende Öffnungen (11,12,26,27) aufweisen, durch welche ein Schwenkbolzen (40) elastisch befestigt ist, der Schwenkbolzen (40) mit einem elastischen Stift (50) versehen ist, der im allgemeinen im rechten Winkel zur Achse des Schwenkbolzens (40) angeordnet ist, und das zweite Verbindungsstückteil (22) mit ersten und zweiten Nuten (28,29) ausgebildet ist, welche in einem vorbestimmten Winkel in bezug aufeinander angeordnet sind und mit welchen beiden der elastische Stift (50) in Eingriff gebracht werden kann, um erste und zweite winkelige Positionen der Spiegeleinheit (1,2,6) in bezug auf die Basis (7) bereitzustellen.

2. Spiegel nach Anspruch 1, wobei das zweite Verbindungsstückteil (22) erste und zweite Arme (23,24) umfaßt, die in einem Abstand voneinander angeordnet sind und zwischen welchen sich das erste Verbindungsstückteil (10) befindet.

3. Spiegel nach Anspruch 2, wobei der elastische Stift (50) an einem Ende des Schwenkbolzens (40) vorgesehen ist, welches sich aus der Öffnung (27) in dem zweiten Arm (24) erstreckt, und die Nuten (28,29), mit welchen beiden der elastische Stift (50) eingreift, an einer Außenseite des zweiten Arms (24) ausgebildet sind.

4. Spiegel nach Anspruch 3, wobei die ersten und zweiten Nuten (26,27) in einer "X"-Formation angeordnet sind und sich radial in bezug auf die Öffnung (27) in dem zweiten Arm 24) erstrecken.

5. Spiegel nach Anspruch 4, wobei die Nuten (26,27) in einem Winkel von zwischen 0° und 25° beiderseits einer zentralen Linie der "X"-Formation angeordnet sind.

6. Spiegel nach einem der vorhergehenden Ansprüche, wobei eine Schraubenfeder (30) um den Schwenkbolzen (40) innerhalb der Öffnung (11,12) durch das erste Verbindungsstückteil (10) befestigt ist.

7. Spiegel nach einem der Ansprüche 2 bis 5, wobei die durchgehende Öffnung (11,12) des ersten Verbindungsstückteils (10) einen gestuften Durchgang umfaßt, in welchem ein Abschnitt (11) von dem Durchgang einen größeren Durchmesser als ein anderer Abschnitt (12) davon aufweist, und die Öffnung (27) im zweiten Arm (24) des zweiten Verbindungsstückteils (22) einen kleineren Durchmesser als die Öffnung (26) im ersten Arm (23) des zweiten Verbindungsstückteils (22) aufweist.

8. Spiegel nach Anspruch 6, wobei der Schwenkbolzen (40) abgestuft ist, so daß sich ein Abschnitt kleineren Durchmessers (41) davon durch die Öffnung (27) im zweiten Arm (24) erstreckt und ein Abschnitt größeren Durchmessers (43) davon in die Öffnung (26) im ersten Arm (23) eingreift.

9. Spiegel nach Anspruch 6 oder 7, wobei eine Schraubenfeder (30) um den Schwenkbolzen (40) befestigt ist und in dem abgestuften Durchgang gegen eine Stufe, die zwischen den Abschnitten größeren Durchmessers (11) bzw. kleineren Durchmessers (12) des abgestuften Durchgangs definiert ist, gesteckt ist.

## Revendications

1. Rétroviseur externe réversible pour un véhicule à moteur, comprenant un assemblage de miroir (1, 2, 6) ; une base (7) pour supporter ledit assemblage de miroir (1, 2, 6) et arrangé de manière à être monté sur un corps de véhicule ; un mécanisme de réversibilité gauche/droite (10, 22, 40) pour permettre audit assemblage de miroir (1, 2, 6) d'être monté soit sur le côté gauche soit sur le côté droit du corps de véhicule, **caractérisé en ce que** ledit mécanisme (10, 22, 40) comprend un joint annulaire (10, 22), une première partie (10) formée sur ledit assemblage de miroir (1, 2, 6) et une seconde partie (22) formée sur ladite base (7), lesdites première et seconde parties d'articulation (10, 22) étant munies de trous traversants d'alignement (11, 12, 26, 27) à travers lesquels un axe de pivotement (40) est monté de manière élastique, ledit axe de pivotement (40) étant pourvu d'une broche à ressort (50) arrangée généralement de manière perpendiculaire audit axe de pivotement (40), et ladite seconde partie d'articulation (22) étant formée avec des première et seconde rainures (28, 29) qui sont arrangées à un angle prédéterminé l'un par rapport à l'autre et dans chacune desquelles une broche à ressort (50) peut être engagée de manière à présenter des première et seconde positions angulaires de l'assemblage de miroir (1, 2, 6) par rapport à la base (7).

2. Miroir selon la revendication 1, dans lequel ladite seconde partie d'articulation (22) comprend des premier et second bras (23, 24) espacés l'un de l'autre et entre lesquels ladite première partie d'articulation (10) est située.

3. Miroir selon la revendication 2, dans lequel ladite broche à ressort (50) est prévue à l'une des extrémités dudit axe de pivotement (40) qui s'étend à l'extérieur de ladite ouverture (27) dans ledit second bras (24), et lesdites rainures (28, 29) dans chacune desquelles ladite broche à ressort (50) s'engage sont formées sur une surface extérieure dudit second bras (24).

4. Miroir selon la revendication 3, dans lequel les première et seconde rainures (26, 27) sont arrangées en une formation en "X" s'étendant radialement par rapport à ladite ouverture (27) dans ledit second bras (24).

5. Miroir selon la revendication 4, dans lequel les rainures (26, 27) sont arrangées à un angle compris entre 0 ° et 25° de chaque côté de la ligne centrale de ladite formation en "X".

6. Miroir selon l'une quelconque des revendications précédentes, dans lequel un ressort hélicoïdal (30) est monté autour dudit axe de pivotement (40) à l'intérieur de ladite ouverture (11, 12) à travers ladite première partie d'articulation (10).

7. Miroir selon l'une quelconque des revendications 2 à 5, dans lequel ledit trou traversant (11, 12) de ladite première partie d'articulation (10) comprend un passage étagé dans lequel une partie (11) dudit passage possède un diamètre plus grand qu'une autre partie (12) de celui-ci, et ladite ouverture (27) dans ledit second bras (24) de ladite seconde partie d'articulation (22) possède un diamètre plus petit que l'ouverture (26) dans ledit premier bras (23) de ladite seconde partie d'articulation (22).

8. Miroir selon la revendication 6, dans lequel ledit axe de pivotement (40) est étagé de manière à ce qu'une première partie de diamètre plus petit (41) de celui-ci s'étende à travers l'ouverture (27) dans ledit second bras (24) et qu'une partie de diamètre plus grand (43) de celui-ci soit engagée dans ladite ouverture (26) dans ledit premier bras (23).

9. Miroir selon la revendication 6 ou la revendication 7, dans lequel un ressort hélicoïdal (30) est monté autour dudit axe de pivotement (40) et vient se loger dans ledit passage étagé contre un étage défini entre les parties de diamètre plus grand (11) et de diamètre plus petit (12) dudit passage étagé.
